# EUROPEAN PATENT SPECIFICATION

(11) **EP 0 579 311 B1**
(45) Date of publication and mention of the grant of the patent: **15.10.1997**
(21) Application number: 93201941.7
(22) Date of filing: 02.07.1993
(51) Int. Cl.: E01H 10/00, A01C 15/00

(54) **Device for containing and supplying particulate and fluid material**
Vorrichtung zum Aufnehmen und Abgeben von körnigem Material und von flüssigem Material
Dispositif pour contenir et distribuer des matériaux granulés et des fluides

(30) Priority: 16.07.1992 NL 9201285
(43) Date of publication of application: 19.01.1994
(73) Proprietor: Nido-Universal Machines B.V., NL-7451 NW Holten (NL)
(72) Inventor: Jansen, Johan, NL-7451 NW Holten (NL)
(74) Representative: Prins, Hendrik Willem

(56) References cited:
- DE-A- 3 829 624
- FR-A- 2 667 335
- GB-A- 1 017 903

## Description

The present invention relates to a device for containing and supplying both particulate and fluid material according to the preamble of claim 1. The invention relates in particular to a spreading device which can be placed on a vehicle and with which salt can be contained and supplied as particulate material and a freezing point depressing agent as fluid.

It is thus possible, depending on the weather conditions and the type of road surface and its state, to dose either particulate material or fluid.

In a known spreading device the advantage is herein achieved that the fluid can also be supplied via the rotating dish, so that in principle the same supplying means can be applied for supplying particulate material and fluid.

A known device for supplying particulate and fluid material is characterized in that the device comprises a container for particulate material and one or more containers for fluid material, as known e.g. by FR-A-2 667 335.

This known device has the drawback that the capacity of the container for particulate material and of the container for fluid material is fixed and in principle an optimum ratio of both types of material can seldom or never be transported.

The invention has for its object to provide a device for containing and supplying particulate and fluid material, wherein in principle the ratio of the quantities of particulate material and fluid material for transporting can be adjusted within certain limits. This is achieved with a device for containing and supplying particulate material and fluid material by the features of the second part of claim 1. by the features of the second part of claim 1.

By adjusting the dividing wall it is possible to enlarge or reduce in size the volume of the hopper for particulate material and the volume of the container for fluid material and vice-versa.

According to a first embodiment the dividing wall forms part of the hopper for particulate material. According to a second embodiment the dividing wall forms part of the container for fluid material. Which in that case is preferably incorporated in the hopper for particulate material. The dividing wall of the hopper for particulate material is preferably a hinged hopper wall so that the volume of the hopper for particulate material can easily be adapted. An exceptionally advantageous embodiment is obtained when the hinged hopper wall connects onto a discharge member and the fluid container is partly flexible. Through making use of a hinged hopper wall connecting onto the discharge member, that is, generally a discharge conveyor, no further provisions are necessary to ensure good delivery of particulate material when the hinged hopper wall is adjusted.

A maximum adjustability of the ratio of the volume of the hopper for particulate material and of the container for fluid material is obtained if in preference the hopper for particulate material comprises at least two hinged hopper walls extending along a discharge member and a flexible fluid container adjacent each hinged hopper wall. The volume of both containers can now be changed over a very wide range. It is particularly recommended herein that one or both containers for fluid material are enclosed by a rigid casing, whereby very large volumes can be contained in the flexible container for fluid material.

In the case the dividing wall forms part of the container for fluid material, it is recommended that the fluid container can be expanded longitudinally into the hopper for particulate material. The volume of the hopper for particulate material can herein be changed in very simple manner in that the container for fluid material occupies to a greater or lesser extent the interior space thereof. According to a preferred embodiment the fluid container comprises a concertina wall. It is particularly recommended herein that the cross sectional dimension of the fluid container is substantially equal to the inner dimension of the hopper for particulate material. Both containers thus connect optimally onto each other and optimum supply of particulate material remains ensured. It is further recommended herein that the dividing wall is a rigid end wall with concertina walls connecting thereto.

Mentioned and other features of the device according to the invention for containing and supplying particulate and fluid material will be further elucidated hereinbelow on the basis of two embodiments given only by way of example, while reference is made to the annexed drawing.

In the drawing:
figures 1 and 3 each show a perspective, partly broken away view of a device according to the invention; and
figure 2 shows on a larger scale a section along the line II-II in figure 1.

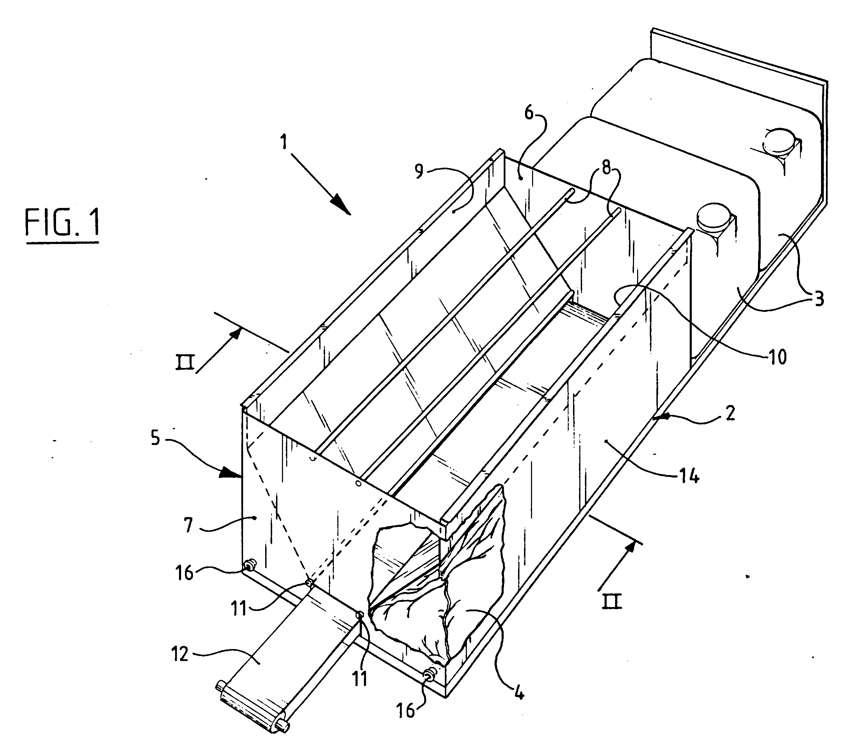

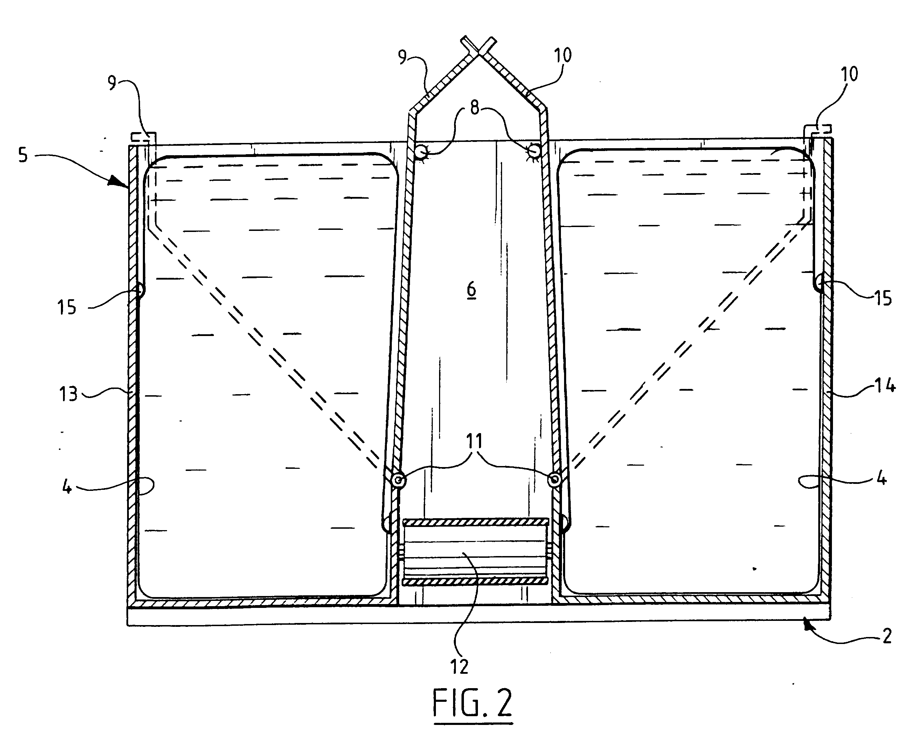

Figures 1 and 2 show a device 1 for supplying particulate material, salt for spreading, and fluid material, a freezing point depressing agent. Device 1 comprises a frame 2 which carries two fluid containers 3 with a fixed volume and two flexible fluid containers 4 which are located to the sides of and below a hopper 5 for particulate material, salt for spreading. Hopper 5 comprises two rigid end walls 6 and 7 mutually connected by rods 8, and two hinged hopper walls 9 and 10 which hinge along an shaft 11 along a discharge member 12 comprising a conveyor. Hopper 5 is further provided with two rigid side walls 13 and 14.

Figure 2 shows both extreme positions of the hinged walls 9 and 10. The hopper for particulate material 5 has a smallest volume in the positions of walls 9 and 10 shown in hatched lines, wherein the walls rest against the rods 8, and a largest volume in the positions shown in dashed lines, wherein the hinged walls 9 and 10 rest against the rigid side walls 13 and 14.

The flexible fluid containers 4 adjoin the hopper 5 for particulate material, wherein the hinged walls 9 and 10 form the dividing wall. The fluid container 4 is manufactured from a liquid-tight plastic material and is connected to the rigid side walls via a fixing strip 15.

In figure 1 the flexible fluid container 4 has a smallest volume and in figure 2 a largest volume. The fluid contained in the flexible fluid containers 4 can be supplied via the spigots 16 to hoses (not shown) which feed the fluid to a supplying means (not shown). The fluid from containers 3 is also fed to this supplying means. As stated above, this supplying means can be used for supplying both particulate material and fluid.

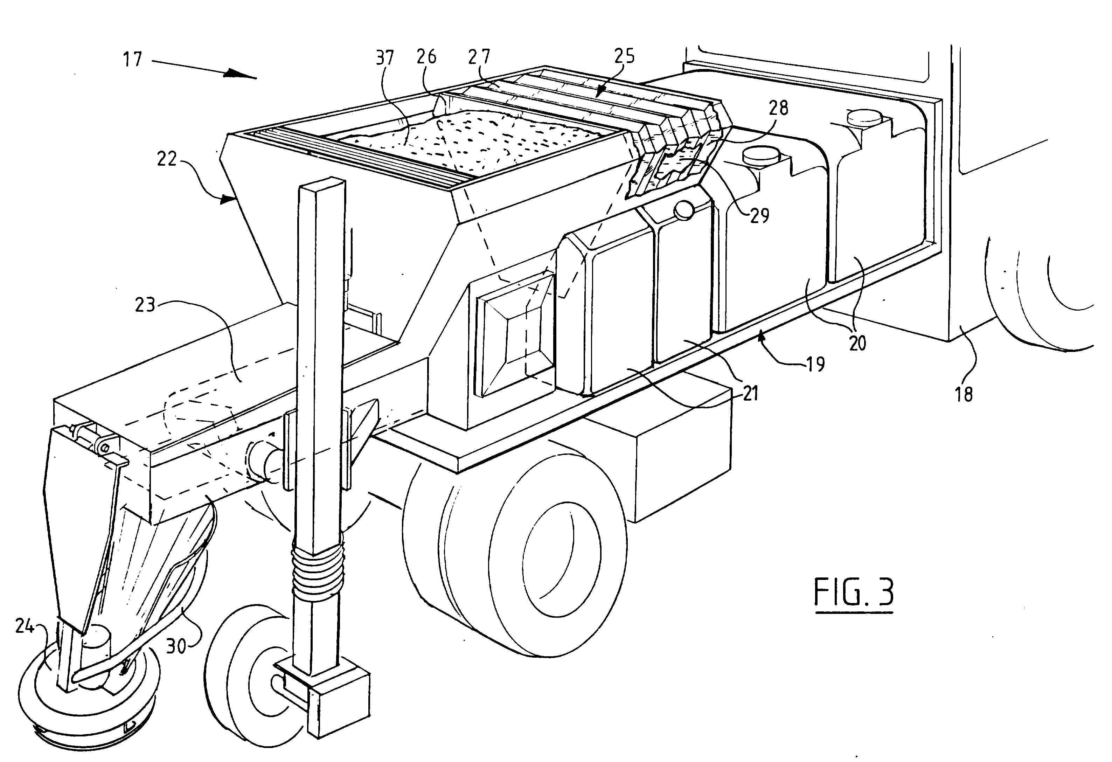

Figure 3 shows a device 17 according to the invention which comprises a frame 19 which is placed on a vehicle 18 and which carries a number of fluid containers 20, 21 of fixed volume, and further a funnel-like hopper 22 for solid material. Hopper 22 is provided with a conveyor 23 with which particulate material can be delivered to a supplying means in the form of a rotatable dish 24. Fluid from fluid containers 20 and 21 can also be fed to this dish via a conduit 30.

Further held in hopper 22 is a fluid container 25, the volume of which is variable. The cross sectional dimension of container 25 corresponds substantially with the inner dimension of hopper 22. Container 25 comprises a rigid dividing wall 26 which separates the fluid container 25 from the hopper 22 for particulate material. The rigid dividing wall 26 is guided slidably inside hopper 22 and concertina-like side walls 27 and 28 connect thereto.

Depending on the requirement, the dividing wall 26 can be disposed at another position, whereby the volume of hopper 22 for salt 37 is variable in relation to the fluid 29 contained in container 25. The fluid 29 is again supplied to conduit 30.

It will be apparent that the device according to the invention need not only be applied for a spreading device with which a road surface can be provided with salt for spreading and freezing point depressing fluid. The device according to the invention finds application in all those situations wherein, depending on the conditions, both particulate and fluid material can be supplied from the device. It is particularly conceivable for solid and liquid fertilizer to be supplied.

## Claims

1. Device for containing and supplying particulate material and fluid material, comprising at least one substantially rigid hopper for particulate material, at least one container for fluid material characterized by at least one displaceable dividing wall located between the hopper and the flexible fluid material container, which fluid material container is flexible and flexible in the displacement direction of the displaceable dividing wall.

2. Device as claimed in claim 1, wherein the dividing wall is a wall of the hopper for particulate material.

3. Device as claimed in claim 2, wherein the dividing wall is a hinged hopper wall.

4. Device as claimed in claim 3, wherein the hinged hopper wall connects onto a discharge member and the fluid container is partly flexible.

5. Device as claimed in claims 1-4, wherein the hopper for particulate material comprises at least two hinged hopper walls extending along a discharge member and a flexible fluid container adjacent each hinged hopper wall.

6. Device as claimed in claim 1, wherein the dividing wall is a wall of an expandable fluid container which is incorporated in the hopper for particulate material.

7. Device as claimed in claim 6, wherein the fluid container can be expanded longitudinally in the hopper for particulate material.

8. Device as claimed in claim 6 or 7, wherein the fluid container comprises a concertina wall.

9. Device as claimed in claims 6-8, wherein the cross sectional dimension of the fluid container is substantially equal to the inner dimension of the hopper for particulate material.

10. Device as claimed in claims 6-9, wherein the dividing wall is a rigid end wall with concertina walls connecting thereto.

## Patentansprüche

1. Vorrichtung zum Aufnehmen und Abgeben von körnigem und von flüssigem Material, mit wenigstens einem im wesentlichen starren Abgabetrichter für das körnige Material und wenigstens einem Behälter für das flüssige Material,
gekennzeichnet durch wenigstens eine versetzbare Unterteilungswand zwischen dem Aufgabetrichter und dem flexiblen Behälter für das flüssige Material, wobei der Behälter für das flüssige Material flexibel ausgebildet und in Versetzungsrichtung der versetzbaren Unterteilungswand flexibel ist.

2. Vorrichtung nach Anspruch 1,
bei welcher die Unterteilungswand eine Wand des Aufgabetrichters für das körnige Material ist.

3. Vorrichtung nach Anspruch 2,
bei welcher die Unterteilungswand eine schwenkbar angelenkte Wand des Aufgabetrichters ist.

4. Vorrichtung nach Anspruch 3,
dadurch gekennzeichnet, daß die gelenkige Aufgabetrichterwand mit einem Abgabeglied verbunden ist und der Flüssigkeitsbehälter teilflexibel ist.

5. Vorrichtung nach den Ansprüchen 1 bis 4,
bei welcher der Aufgabetrichter für das körnige Material wenigstens zwei schwenkbar angelenkte Wände besitzt, die sich längs eines Abgabeglieds erstrecken, und daß jeweils ein flexibler Flüssigkeitsbehälter benachbart zu jeder angelenkten Aufgabetrichterwand angeordnet ist.

6. Vorrichtung nach Anspruch 1,
bei welcher die Unterteilungswand eine Wand eines ausdehnbaren Flüssigkeitsbehälters ist, die in dem Aufgabetrichter für körniges Material untergebracht ist.

7. Vorrichtung nach Anspruch 6,
bei welcher der Flüssigkeitsbehälter in Längsrichtung des Aufgabetrichters für das körnige Material ausdehnbar ist.

8. Vorrichtung nach den Ansprüchen 6 oder 7,
bei welcher der Flüssigkeitsbehälter eine harmonikaartige Wand besitzt.

9. Vorrichtung nach einem der Ansprüche 6 bis 8,
bei welcher die Querschnittsabmessung des Flüssigkeitsbehälters im wesentlichen gleich ist der inneren Abmessung des Aufgabetrichters für das körnige Material.

10. Vorrichtung nach den Ansprüchen 6 bis 9,
bei welcher die Unterteilungswand eine starre Stirnwand ist, an der harmonikaartige Wände festgelegt sind.

## Revendications

1. Dispositif pour contenir et distribuer un matériau particulaire et un fluide, comportant au moins une trémie à peu près rigide pour matériau particulaire et au moins un conteneur pour fluide, caractérisé en ce qu'au moins une paroi de séparation déplaçable est située entre la trémie et le conteneur de fluide souple, lequel conteneur de fluide est souple dans la direction de déplacement de la paroi de séparation déplaçable.

2. Dispositif selon la revendication 1, dans lequel la paroi de séparation est une paroi de la trémie pour matériau particulaire.

3. Dispositif selon la revendication 2, dans lequel la paroi de séparation est une paroi de trémie articulée.

4. Dispositif selon la revendication 3, dans lequel la paroi de trémie articulée est reliée à un élément de décharge et le conteneur de fluide est partiellement souple.

5. Dispositif selon l'une quelconque des revendications 1 à 4, dans lequel la trémie pour matériau particulaire comporte au moins deux parois de trémie articulées s'étendant le long d'un élément de décharge et un conteneur de fluide souple est adjacent à chaque paroi de trémie articulée.

6. Dispositif selon la revendication 1, dans lequel la paroi de séparation est une paroi d'un conteneur de fluide extensible qui est incorporé dans la trémie pour matériau particulaire.

7. Dispositif selon la revendication 6, dans lequel le conteneur de fluide peut être expansé longitudinalement dans la trémie pour matériau particulaire.

8. Dispositif selon la revendication 6 ou 7, dans lequel le conteneur de fluide comporte une paroi en accordéon.

9. Dispositif selon l'une quelconque des revendications 6 à 8, dans lequel la dimension en coupe du conteneur de fluide est à peu près égale à la dimension intérieure de la trémie pour matériau particulaire.

10. Dispositif selon l'une quelconque des revendications 6 à 9, dans lequel la paroi de séparation est une paroi d'extrémité rigide ayant des parois repliables reliées à celle-ci.
